# EUROPEAN PATENT APPLICATION

(11) **EP 2 618 450 A1**
(43) Date of publication of application: **24.07.2013**
(21) Application number: 13000172.0
(22) Date of filing: 14.01.2013
(51) Int. Cl.: H02J 7/00, H02J 9/02, H02J 13/00, G06Q 10/06

(54) **Lighting and communication device for ultra-wide band networks**

(30) Priority: 18.01.2012 IT MN20120002
(71) Applicant: Energe S.R.L., 24020 Cene (BG) (IT)
(72) Inventor: Gotti, Eros Antonio, 24021 Albino (BG) (IT)
(74) Representative: Gatti, Enrico

(57) **Abstract**

A lighting and communication device for ultra-intelligent networks, comprising an enclosure positioned on a support column; said enclosure being divided into a first and a second housing, said first housing comprising a series of LED or other lamps; said second housing comprising at east one electronic card; said at least one electronic card being able to communicate via radio with consuming water, gas and electricity meters to receive remote reading signals from said meters and to feed signals to said meters; said at least one electronic card further comprising internet connection means for users transiting within a predefined area about said device; said at least one electronic card further comprising sensors for measuring temperature, humidity, CO2, pm10, luminosity, movement; said least one electronic card comprising at least one video camera; said least one electronic card comprising means for making emergency calls to first aid, medical, police, fire service centres; said least one electronic card comprising a plurality of means for communication with one or more remote administrators; said device transmitting by means of said plurality of communication means all the information obtained from said sensors, said at least one video camera, and said remote reading signals of said meters, to said one or more remote administrators; said plurality of communication means comprising fibre optic, conveyed wave, radio wave and internet means; said one or more remote administrators receiving the information fed by said device, processing it and feeding command or communication signals to said device; said device, when commanded by said one or more remote administrators, feeding command or communication signals to the consumers or devices connected to it. (Figure 4).

## Description

The present invention relates to a lighting and communication device for ultra-intelligent networks, particularly indicated for exploiting the public lighting network by making it become an ultra-wide band data network to hence implement additional services of high technological level.

A large part of residential centres is knowingly covered by a public lighting network provided to illuminate roads, squares, etc. This lighting network is currently mainly composed of streetlights which use high pressure sodium lamps as their light source.

Although said streetlights perform their task, which is to illuminate with regulation of the emitted light intensity, they have encountered certain problems.

A first problem emerges from the fact that the electrical energy consumption is considerable, a condition which results in a considerable operating cost.

Another problem, deriving from the use of the stated lamps, is that the lamps used have a rather limited average life with the need for frequent replacement, with further cost increase; in fact, all the aforestated involves costs both for materials and labour for replacement, in addition to the electrical energy consumption.

To reduce both consumption and costs, the traditional said streetlights are beginning to be replaced by streetlights having their lighting enclosure provided with LED lamps resulting in a very much lower electrical energy consumption and a greater life with a reduction in consumption and maintenance costs and hence running costs for the overall installations.

Currently, there is an increasingly felt need to be able to monitor various situations and conditions within residential centres, both for safety reasons and for environmental control, because of which a start has recently been made on activating and installing a series of electronic devices for monitoring, for example, traffic conditions, or environmental, climatic and meteorological conditions, etc., to hence create control, communication and data collection networks.

The various said devices are distributed within cities in a random manner such as to be hardly functional and of unpleasant appearance by being applied in various ways to the outside of buildings or to dedicated supports and structures.

Moreover, to install the aforesaid devices it has also been thought to utilize the public lighting network by applying the different equipment such as video cameras, CO2, humidity, temperature and other sensors to the streetlights.

It has been found that installing the various electronic devices on existing streetlights involves a considerable cost in addition to the fact that the different functions are always controlled individually and hence from several positions, such that measurements and services are obtained which are totally uncoordinated and sometimes mutually interfere, with handling and maintenance costs which are so high that local administrations are unable to sustain the cost.

This use of streetlights for other purposes derives from the fact that devices already exist for application to traditional streetlights for remotely verifying the operation of the streetlight and adjusting the luminous flux to achieve an initial energy saving.

These devices can be inserted into the streetlight either into the column itself or into the pit at the column base, such devices being able to be used as a non-integrated data network within the system. An object of the present invention is to substantially solve the problems of the known art by overcoming the aforedescribed difficulties by means of a lighting and communication device for ultra-intelligent networks, able to exploit the public lighting network by making it become an ultra-wide band data network to hence implement additional services of high technological level.

A second object of the present invention is to provide a lighting and communication device for ultra-intelligent networks which enables low consumption public lighting to be obtained, with internet access by wireless, fibre optic or conveyed wave technology, a video-surveillance service, a meteorological measurement service, an electric socket for recharging battery-operated vehicles, and the facility for contact and dialogue with emergency numbers.

A third object of the present invention is to provide a lighting and communication device for ultra-intelligent networks able to offer considerable ease of installation and use and to achieve considerable saving in electrical energy consumption in public lighting installations.

Another object of the present invention is to provide a lighting and communication device for ultra-intelligent networks able to achieve drastic reduction in maintenance interventions (caused by periodic consumption of lamps) and consequently, by reducing maintenance, a reduction in climate-altering emissions due to the movement of the maintenance vehicles.

Another object of the present invention is to provide a lighting and communication device for ultra-intelligent networks which results in an urban structure combining the most modern technologies in the field of telecommunications, domotics and information technology, and which can also be used and applied to existing lighting columns. Another object of the present invention is to provide a lighting and communication device for ultra-intelligent networks which enables each individual streetlight to be remotely controlled to know its operating state and to automatically regulate its light intensity on the basis of actual requirements.

Another object of the present invention is to provide a lighting and communication device for ultra-intelligent networks which enables the various electronic devices distributed unattractively in a disorganized manner within the city to be considerably reduced.

Another object of the present invention is to provide a lighting and communication device for ultra-intelligent networks which has a simple and aesthetically attractive structure adaptable to the environment in which it is inserted.

Another object of the present invention is to provide a lighting and communication device for ultra-intelligent networks which is of simple construction and good functionality.

These and other objects which will become more apparent during the course of the present description, are substantially attained by a lighting and communication device for ultra-intelligent networks, as claimed hereinafter.

Further characteristics and advantages will be more apparent from the detailed description of a lighting and communication device for ultra-intelligent networks, in accordance with the present invention, given below with reference to the accompanying drawings, which are provided by way of non-limiting example and in which:
Figure 1 is a schematic perspective view of a lighting and communication device for ultra-intelligent networks in accordance with the present invention;
Figure 2 is a schematic lateral view of the device of Figure 1;
Figure 3 is a schematic rear view of the device of Figure 1;
Figure 4 is a schematic view of a smart grid with the device of the invention.

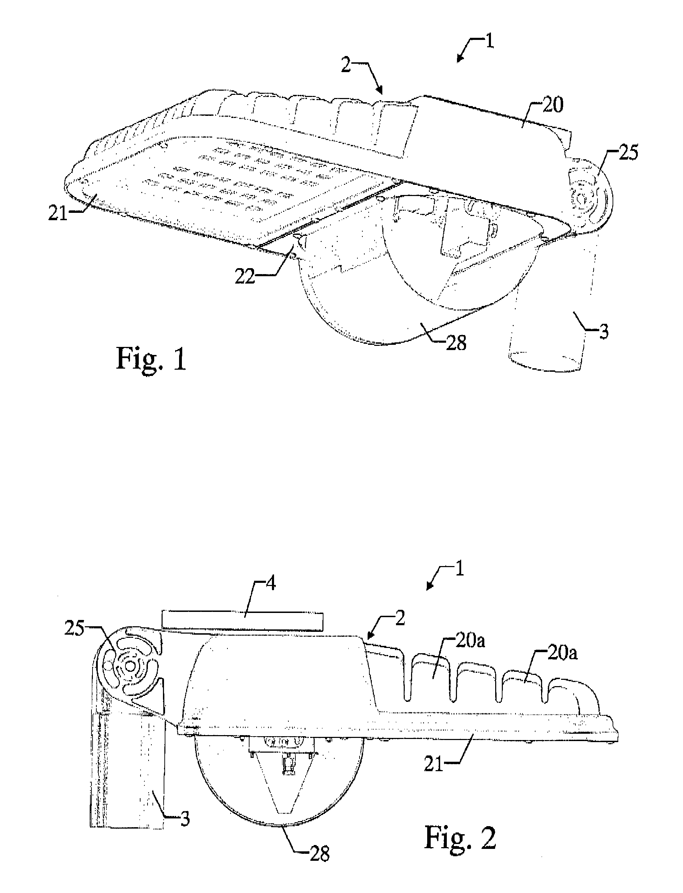

With reference to said figures, and in particular to Figure 1, the reference numeral 1 indicates overall a lighting and communication device for ultra-intelligent networks, in accordance with the present invention.

The lighting and communication device for ultra-intelligent networks 1 according to the invention, is configured structurally as a streetlight consisting substantially of a lighting enclosure 2 positioned on a support column 3 with the appearance of a traditional streetlight of a residential centre or in the style of a historical centre. The structure both of the lighting enclosure and of the support column is of painted diecast aluminium or cast iron, or of any other material, either metal or otherwise suitable for the purpose.

In particular, the lighting enclosure 2 according to the present invention can also be installed on existing communications without the need to modify the structure of the lighting enclosure.

According to the present embodiment, the lighting enclosure 2 comprises a containing and protection structure 20 consisting of a single block divided into two housings.

In greater detail, as shown in Figure 1, the first housing 21 contains the lighting components and is closed by a glass plate, while the second housing 22 contains the intelligent part and is closed by transparent plastic material.

As already stated, the first housing 21 contains the streetlight illuminatng part consisting of LED lamps or other types of lamp suitable for illumination. In the illustrated embodiment, the LED lamps are of variable number such as to be able to achieve a power between 30W and 140W based on lighting requirements. The LED lamps are also equipped with lenses of various type for adapting the luminous flux to the street dimensions and to the position of the communication. In addition, the LED lamps are mounted on an electrical circuit which enables the heat produced to be dissipated, given that it is in contact with the containing structure 2, this coupling enables the LED lamps to undergo the thermal dissipation necessary to prevent their damage. Moreover, above the LED lamps a plastic frame is secured to enable the LED lamps to be fixed, the entire assembly is closed by a hardened glass plate which is not influenced by either the internal temperature variations or those of the external environment.

In addition, the top of the containing structure 20 presents fins 20a to further facilitate dissipation of the heat produced by the LED lamps. The lighting part is designed to comply with and satisfy current energy saving regulations, such that they do not remain lit when unnecessary.

As already stated, the second housing 22 contains the intelligent part composed of electronic cards, video cameras, antennas for data networks and a power unit for the entire system. The second housing 22 is closed by a transparent hemispherical plastic cap 28 shown in Figure 2.

In greater detail, the cap 28 which closes and protects the second housing is of smoke coloured polycarbonate which is anti-reflecting and reduces visibility of the internal components from the outside. According to the present embodiment, a first electronic card, located within the second housing, is provided with a microprocessor to control and implement a video-surveillance service by means of one or two video cameras of either fixed or motorized type.

In this respect, the device is arranged to implement control of vehicular and pedestrian traffic via the video cameras which transmit the collected images to an operating centre which handles and files them.

The present device comprises at least one second electronic card to control and implement Wi-Fi reception and transmission.

In addition, a central control and management card is provided for all the other externally connected peripherals of the streetlight such as fibre optic, Wi-Fi, conveyed wave data transmission and communication towards water, gas and electricity meters, etc.

The second housing 22 is scheduled to receive at least one and up to five electronic cards.

The electronic cards consist of printed circuits supporting electronic components, the system being managed by several microprocessors which dialogue mutually for the various functions.

As already stated, the second housing 22 houses a series of antennas of different configuration, their task being to transmit and receive data on various preset frequencies necessary for device operability, such as internet connections and connections to the aforesaid meters. In the present embodiment, the number of antennas can range from a minimum of one to seven.

In addition to the aforesaid, the various constituent components of the intelligent part are each fixed directly to the containing and protection structure 20 by fixing means, which in this specific case are screws.

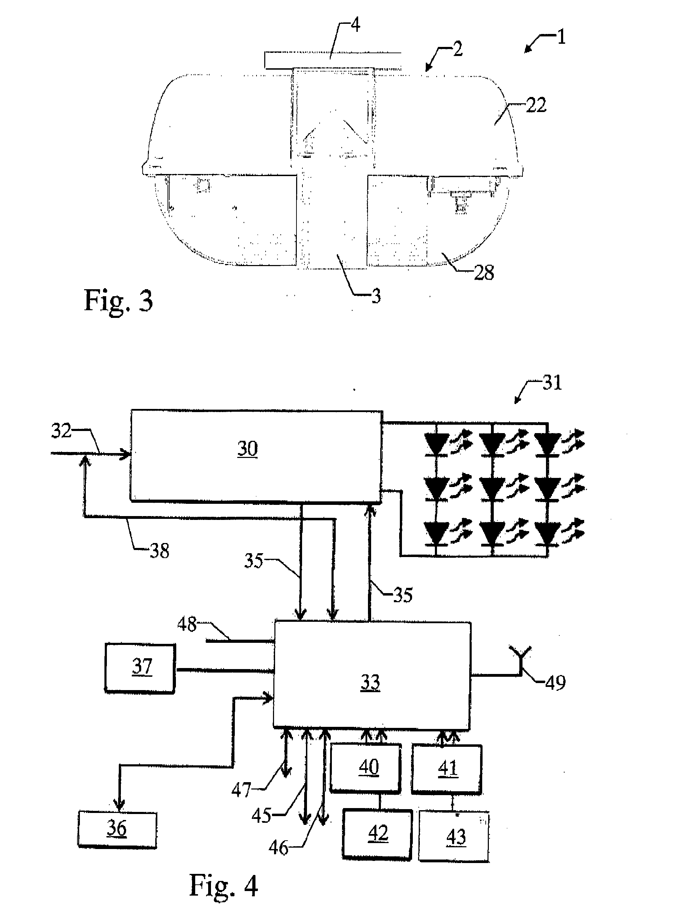

On the top of the containing structure there is a solar panel 4 enabling the device to operate in the absence of power as shown in Figure 3. The energy provided by the solar panel enables certain basic functions to be maintained active, such as measurement of the meteorological and/or environmental conditions, and/or the means of communication.

The device in fact is able to measure the CO2 in the environment by sensors, enabling a very accurate mapping of the carbon dioxide distribution to achieve very detailed emission control, to enable timely intervention to be carried out.

The device 1 is also arranged to measure the ice conditions of the road because the acquisition of both temperature and humidity data enables a judgement to be made regarding possible ice presence. According to the present embodiment, in the rear part of the enclosure there is a joint 25 for fixing to the column 3 which also acts as a support for the aforestated meteorological and environmental sensors.

In addition, in an inspection compartment in the column 3 a sealed container of aluminium or other anti-tamper material is installed enabling video calls to be made to the forces of order to request aid or to pass information. In this respect, on the column there is a rescue box enabling contact to be made with the operating centre, top enable this to see the situation, its context and the person making the call. Provision is also made to insert a credit card of payment or recognition type enabling the vehicle to be recharged, as a current socket is provided on the column for battery recharging.

In particular, the device 1 comprises a control and power 30 circuit for the LED lamps 31. The circuit 30 is powered by the electric mains 32. The circuit 30 powers the electronic cards 33 via the connection 34.

The electronic cards 33 control the circuit 30 via the connection 35. A video camera 36 is connected to the card 30. The video camera 36 feeds its images to the cards 30, this latter then feeding to the video camera 36 its movement and positioning commands.

A Wi-Fi connection system 37 is connected to the cards 30. Communication with conveyed waves is enabled by the connection 38 to the electric mains 32.

A plurality of sensors are connected to the cards 30: for example an environmental temperature and humidity sensor 40; a luminosity sensor 41; a CO2 sensor 42; and a pm10 sensor 43.

Radio connections 45 and 46 are provided to the various water, gas and electricity meters.

An RS232 connection 47 is provided.

A fibre optic connection 48 is provided.

A series of communication means are also provided which via one or more antennas 49 emit signals at the various frequencies and protocols.

The device of the invention integrates many functions into a single very compact object; in this respect, with the present device the following functions and applications can be achieved:
- energy saving lighting with automatic luminous flux reductions, remote control and remote system management;
- video surveillance with filing of images on local or remote memory;
- measurement of meteorological and environmental conditions, temperature, humidity, CO2, PM10, luminosity, movement; ultra-wide band data network connection based on monomodal/multimodal fibre optic technology;
- ultra-wide band based on conveyed wave technology along electric cables and PLC coaxial cables;
- high capacity traffic Wi-Fi data network connection using up to three simultaneous carriers with 2.4/5 Ghz frequency;
- sub Ghz data network connection for remote reading of water, gas and electricity meters;
- data connection with devices mounted at the feet of the streetlight to distribute the recharge service for electric vehicles with credit card reading to debit the provided service cost;
- data connection with devices mounted at the feet of the streetlight to enable emergency calls to first aid, medical, forces of order, fire brigade centres, it being possible to directly dialogue with them.

All the aforestated networks have been conceived to create and implement smart grids for use in the energy saving sector and in energy production from renewable and traditional sources.

The task of the smart grid is to interconnect all energy production systems and all energy users, such as to feed energy into the distribution network at the time of requirements instead of having to transport energy to distant places, with considerable losses; essentially the system is such as to make the energy offered and the energy requirement coincide within the strictest possible limit.

In this respect, when energy is transported the present-day loss is about 60%. If a system were provided which stated where energy was available, the losses could be reduced.

The device is an important information and communication element for the smart grid.

The device of the invention is installed by connecting to the existing electrical network and to the fibre optic data connection if existing.

In greater detail, the streetlight is automatically switched on at dusk, or is switched on and is self-regulating on the basis of the surrounding luminosity and/or of the time of day, or is accomplished by a control centre or is lit by a movement sensor only when a person or vehicle passes by when permitted, or is never extinguished but continues with low intensity which is considerably increased on said passage.

With the device of the invention, meteorological and other data can be recorded and filed both locally and remotely.

Data transmission takes place either by Wi-Fi transmission or via cable or via radio or via optical fibre.

The device also provides a hotspot, i.e. a spot covering an area where the internet can be accessed wirelessly by using a router connected to an internet service provider, the most widespread standard in this field currently being Wi-Fi.

Simultaneous transmission vectors are possible with this device, which can be fed either simultaneously or in turn.

The device can also be used for so-called smart metering, i.e. by receiving signals from the gas, electricity and water meters of the various consumers and feeding them to a remote handling and control centre. Smart metering also enables signals to be fed to meters, making it possible to immediately intervene if problems or faults arise, without having to visit the site.

According to the present invention, the device can be considered to be a node of a distribution network with intelligent sensors which enable many parameters to be measured for more efficient management of the city, then known as a smart city, the data being provided in wireless, fibre optic or conveyed wave mode in real time to citizens or to competent management authorities.

The device transmits all the information obtained from the sensors, from the video camera and from the meters to one or more remote administrators.

The remote administrator receives all the information, processes it and sends command or communication signals to the device, then by receiving signals from all the installed devices is able to control and manage the entire network.

When commanded by the remote administrator the device feeds command or communication signals to consumers or to devices connected to them.

The electronic cards include electronic circuits which are not further described as an expert of the art is able to implement them on reading the present description.

The present invention hence attains the proposed objects.

The lighting and communication device for ultra-intelligent networks of the invention, by utilizing the public lighting network, enables an ultra-wide band data network to be achieved without having to undergo excavation work, as it is able to implement additional services of high technological level which cannot be currently implemented with the normal internet based on ADSL technology. In this respect, it provides 24 hour video surveillance, measurement of meteorological and environmental conditions, a series of data network connections, etc.

Moreover, the device also enables personalized economical management of the public lighting service with consequent energy saving and better management of public installations (photovoltaic and thermal solar installations, hydroelectric power stations, etc.). Advantageously, the lighting device of the invention is able to offer great facility of installation and use, and enables considerable electrical energy saving. In this respect, the LED light source has a decidedly lower energy consumption than current commercial lamps mainly used up to the present time. With the device of the present invention a considerable increase in average life of the light source is achieved given that by consuming much less energy and producing much less heat than currently used light sources, it enables the electrical energy requirement to be reduced, with considerable lessening of overall consumption, leading to a lesser environmental impact from the nature saving and protection viewpoint.

A further advantage of the device of the invention is that it provides an urban structural element combining the most modern technologies in the field of telecommunications, domotics and information technology which is also applicable to existing lighting columns. Moreover the device enables each individual lighting enclosure to be remotely controlled to enable its operating state to be known and its luminous intensity to be automatically regulated on the basis of actual requirements.

In particular, the device of the present invention enables the various electronic appliances distributed randomly within cities to be drastically reduced, these being hardly practical and of unpleasant appearance.

In addition, many of the current appliances distributed within cities are daily subjected to vandalism, they being often broken, tampered with or stolen, whereas with the device of the invention they are firstly much less evident, and moreover they are absolutely inaccessible so that the integrity of the components and their operability and functionality are safeguarded and protected.

A further advantage of the present invention is considerable ease of use, simple construction and good functionality.

Numerous modifications and variants can be applied to the present invention, all falling within the scope if its characterising inventive concept.

## Claims

1. A lighting and communication device for ultra-intelligent networks, comprising an enclosure positioned on a support column; said enclosure being divided into a first and a second housing, said first housing comprising a series of LED or other lamps; said second housing comprising at east one electronic card; said at least one electronic card being able to communicate via radio with consuming water, gas and electricity meters to receive remote reading signals from said meters and to feed signals to said meters; said at least one electronic card further comprising internet connection means for users transiting within a predefined area about said device; said at least one electronic card further comprising sensors for measuring temperature, humidity, CO2, pm10, luminosity, movement; said at least one electronic card comprising at least one video camera; said least one electronic card comprising means for making emergency calls to first aid, medical, police, fire service centres; said at least one electronic card comprising a plurality of means for communication with one or more remote administrators; said device transmitting by means of said plurality of communication means all the information obtained from said sensors, said at least one video camera, and said remote reading signals of said meters, to said one or more remote administrators; said plurality of communication means comprising fibre optic, conveyed wave, radio wave and internet means; said one or more remote administrators receiving the information fed by said device, processing it and feeding command or communication signals to said device; said device, when commanded by said one or more remote administrators, feeding command or communication signals to the consumers or devices connected to it.

2. A device as claimed in claim 1, **characterised in that** said lighting device is automatically switched on by a twilight switch.

3. A device as claimed in claim 1, **characterised in that** said lighting device is switched on and self regulated on the basis of the surrounding luminosity.

4. A device as claimed in claim 1, **characterised in that** said lighting device is switched on by means of a movement switch only on passage of a person or a vehicle.

5. A device as claimed in claim 1, **characterised in that** said containing structure presents fins on its top to facilitate dissipation of the heat produced by the LED lamps.

6. A device as claimed in claim 1, **characterised in that** said containing structure presents a solar panel enabling the device to operate in the absence of power, hence enabling said communication means to be maintained active.

7. A device as claimed in claim 1, **characterised in that** in an inspection compartment in said column a sealed anti-tamper container of aluminium is provided acting as a box for requesting aid.

8. A device as claimed in claim 1, **characterised in that** on the column, provision is also made to insert a credit card of payment or recognition type enabling a vehicle to be electrically recharged, a current socket being provided on the column for battery recharging.
